# FASCICULE DE BREVET EUROPEEN

(11) **EP 2 568 034 B1**
(45) Date de publication et mention de la délivrance du brevet: **17.02.2021**
(21) Numéro de dépôt: 12190065.8
(22) Date de dépôt: 07.10.2009
(51) Int. Cl.: C10L 11/04, C10L 11/06, C10L 11/08, B30B 11/00, B30B 11/16

(54) **PROCEDE DE FABRICATION D'UN BLOC ALLUME-FEU**
VERFAHREN ZUR HERSTELLUNG EINES FEUERANZÜNDERBLOCKS
METHOD FOR MANUFACTURING A FIRELIGHTER BLOCK

(30) Priorité: 08.10.2008 FR 0856827
(43) Date de publication de la demande: 13.03.2013
(62) Demande divisionnaire de: 09172479.9
(73) Titulaire: Crea, 74130 Bonneville (FR)
(72) Inventeur: Bodo, Lionel, 74130 AYZE (FR)
(74) Mandataire: Cabinet Poncet

(56) Documents cités:
- EP-A2- 1 690 658
- US-A1- 2001 001 670
- US-B1- 6 737 005
- S. Eriksson, M. Prior: "The briquetting of agricultural wastes for fuel - Chapter 4.Technical aspects of briquetting", Food and Agriculture Organization of the United Nations , 1990, ISBN: 92-5-102918-0 Retrieved from the Internet: URL:http://www.fao.org/docrep/T0275E/T0275 E03.htm [retrieved on 2018-08-14]

## Description

La présente invention concerne les aides pour l'allumage d'un feu dans un foyer ouvert ou fermé (cheminée, barbecue, etc.), et concerne plus particulièrement un bloc allume-feu inflammable par un utilisateur pour initier la combustion de matériaux pour un feu.

On connaît des blocs allume-feu de forme générale sensiblement parallélépipédique qu'un utilisateur enflamme et place ensuite dans un foyer pour faire un feu d'agrément ou de chauffage. Ce type de bloc allume-feu présente l'inconvénient d'être difficile à enflammer autrement que tenu entre les doigts de l'utilisateur en faisant lécher à une flamme de briquet ou d'allumette un angle saillant entre deux faces du bloc.

On comprend en effet qu'enflammer une surface latérale verticale ou la surface supérieure horizontale d'un bloc allume-feu sensiblement parallélépipédique est long et difficile, ce qui obligerait au maintien d'une flamme d'allumage pendant un temps trop élevé qu'il est impossible d'obtenir avec une simple allumette ou difficile à réaliser à l'aide d'un briquet du fait de l'échauffement de ses parties métalliques constitutives qui brûlent l'utilisateur.

Il en résulte des difficultés d'utilisation, notamment lors de la phase d'allumage du bloc, ainsi qu'un manque de sécurité, l'utilisateur pouvant facilement se brûler. Et le risque de brûlure est d'autant plus important qu'il reste souvent dans les mains de l'utilisateur des traces de produit inflammable constituant le bloc allume-feu et qui peuvent également s'enflammer.

On connaît également des blocs allume-feu réalisés par le fractionnement en blocs sensiblement en forme de parallélépipèdes rectangles d'un panneau dérivé de bois MDF (Médium Density Fiberboard) ou panneau de fibres à moyenne densité également connu sous le nom de Médium. Lors du procédé de fabrication de tels blocs, le panneau de Medium est rainuré à intervalle régulier selon deux directions sensiblement perpendiculaires sur ses deux faces principales (dessus et dessous) tout en laissant une faible épaisseur d'âme centrale intacte. Le panneau rainuré est alors imprégné d'un produit hautement inflammable. Par exemple, le panneau rainuré peut être plongé dans un bain de paraffine en fusion. Le panneau rainuré est ensuite retiré du bain puis séché avant d'être fragmenté en petits blocs selon les rainures qui ont été pratiquées sur ses faces principales.

Les blocs allume-feu de ce type présentent une forme sensiblement parallélépipédique munie de quelques irrégularités ou excroissances latérales. Les dimensions et formes de ces irrégularités ou excroissances des faces latérales sont complètement aléatoires de sorte que lorsque ces blocs sont posés sur l'une de leurs faces supérieure ou inférieure planes (constituant antérieurement respectivement l'une des faces principales du panneau rainuré), il reste difficile et très aléatoire de chercher à les allumer en présentant une flamme d'allumage venant lécher les parois accessibles qui sont verticales ou horizontales par rapport à un plan de posage sur lequel ils reposent.

En outre, ce procédé de fabrication est long, onéreux, dangereux à mettre en œuvre du fait de la manipulation de produits liquides hautement inflammables (tels que la paraffine fondue) et difficile à intégrer dans une chaîne de fabrication du fait de son caractère discontinu.

Enfin, les panneaux de fibres à moyenne densité étant fabriqués en utilisant des colles hautement toxiques, ces blocs allume-feu dégagent lors de leur combustion des vapeurs et fumées dangereuses pour l'organisme.

Les documents US 4,810,255, US 4,333,738, US 4,046,518, US 3,988,121, US 3,297,419 et US 5,958,090 décrivent des blocs allume-feu qui ne peuvent pas être facilement enflammés quelle que soit la direction d'approche de la flamme d'allumage lorsque ceux-ci reposent sur un plan.

Le document US 3,988,121 décrit un bloc allume-feu de forme cylindrique à section transversale circulaire.

Le document EP 1 690 658 A2 concerne la formation de granulés à base de minéraux argileux.

Le document US 6,737,005 B1 concerne un procédé de fabrication de formes galéniques solides à partir d'un mélange plastique contenant au moins un agent actif et au moins un liant polymère.

Le document US 2001/001670 A1 décrit un procédé de fabrication de briquettes combustibles par compression entre deux roues mouleuses à alvéoles en forme de tasse.

Un premier problème proposé par l'invention est de produire un bloc allume-feu qui soit facilement inflammable sans avoir à être tenu entre les doigts d'un utilisateur, qui ne s'éteigne pas après avoir été allumé par l'utilisateur, qui présente systématiquement une zone d'allumage facile pour l'enflammer rapidement, et qui soit sensiblement dépourvu de produits chimiques inflammables toxiques et volatiles.

Simultanément, l'invention vise à produire un bloc allume-feu présentant systématiquement une zone d'allumage facile pour l'enflammer rapidement et ce quelle que soit la direction d'approche de la flamme d'allumage amenée par l'utilisateur.

L'invention cherche en outre à proposer un procédé de fabrication de blocs allume-feu qui soit plus facile à mettre en œuvre industriellement en réduisant les coûts, les pertes d'énergie et les risques d'accident.

Selon encore un autre aspect, il est décrit un dispositif de fabrication de blocs allume-feu qui soit peu onéreux, peu encombrant, simple et rapide à manipuler pour la réalisation de blocs allume-feu de bonne qualité.

Pour atteindre ces objets, ainsi que d'autres, l'invention propose un procédé de fabrication d'un bloc allume-feu selon la revendication 1.

Un tel procédé utilise de la paraffine à l'état solide. La paraffine est ainsi plus facile à manipuler et moins dangereuse qu'à l'état liquide où elle est hautement inflammable. En outre, on évite de gaspiller de l'énergie en faisant fondre la paraffine pour la solidifier à nouveau après. La compression du mélange entre les matrices provoque un léger échauffement de la paraffine contenue dans le mélange au contact entre celui-ci et les matrices, favorisant la réalisation d'une couche de surface cohérente conférant une bonne solidité et stabilité au bloc allume-feu ainsi fabriqué.

Le procédé de fabrication est continu : il peut être démarré ou arrêté sur demande à n'importe quel moment, et ce d'autant plus que les matières traitées sont utilisées de façon continue et progressive, dans leur état brut naturel et à température ambiante. Le procédé est peu onéreux et les concavités des alvéoles de compression permettent de réaliser un bloc allume-feu avec des faces de contact convexes se rejoignant selon un bord périphérique saillant, de façon simple et rapide.

Le bloc allume-feu obtenu par ce procédé est facilement inflammable par un utilisateur qui peut amener une flamme d'allumage au voisinage de la face de contact dirigée vers le plan et restant à l'écart dudit plan pour l'enflammer rapidement. En outre, après qu'une telle face ait été embrasée, on est certain que celle-ci ne s'éteindra pas : cette face de contact restant à l'écart du plan, l'amenée d'oxygène nécessaire à la combustion sera toujours assurée, et ce d'autant plus que le bloc allume-feu repose en équilibre stable sur la zone d'appui.

Une position d'équilibre "stable" est définie comme étant la position dans laquelle reviendra se placer un objet dans le cas où un élément extérieur le sollicite en léger déplacement à l'écart de cette position.

La partie de face de contact dirigée vers ledit plan et restant à l'écart dudit plan occupant toute la périphérie de la zone d'appui proéminente, le bloc allume-feu peut être facilement embrasé sans être tenu entre les doigts d'un utilisateur, et ce quelle que soit la direction d'approche de la flamme d'allumage amenée par l'utilisateur ou par un bloc allume-feu adjacent.

Avantageusement, le mélange peut être introduit sous pression dans la presse à agglomérer, de préférence au moyen d'une vis sans fin d'amenée et de compression. La vis sans fin d'amenée et de compression permet de réaliser une précompression du mélange pour assurer un meilleur remplissage des alvéoles de compression. On améliore ainsi grandement la qualité, la densité et la compacité des blocs allume-feu, et donc leur autonomie de combustion.

De préférence, les copeaux de bois ou la sciure de bois peuvent présenter avant compression un taux d'humidité inférieur à environ 15 % en poids, compris de préférence entre environ 8 % et environ 12 % en poids. Un tel taux d'humidité, sensiblement égal au taux d'humidité de l'air ambiant, assure qu'une fois fabriqué le bloc allume-feu n'aura pas tendance à absorber de l'humidité présente dans l'air ambiant lors de son stockage, ce qui pourrait nuire à sa cohérence et le faire éclater. On évite également d'avoir une humidité trop élevée dans le mélange avant compression. En effet, l'eau étant incompressible, une trop forte humidité dans le mélange rendrait impossible une bonne compression de celui-ci et induirait un risque de désagrégation ultérieure des blocs allume-feu.

De préférence, la poudre de paraffine peut présenter une granulométrie comprise entre environ 600 µm et environ 2 mm, de préférence entre environ 600 µm et environ 800 µm. La poudre de paraffine présente ainsi une taille suffisante pour agglomérer les copeaux de bois ou les particules de sciure de bois entre eux par une simple compression sans échauffement particulier. Et la taille de grains de paraffine choisie reste suffisamment faible pour qu'en surface du bloc allume-feu, où se produit un léger échauffement lors de la compression, la paraffine soit suffisamment ramollie, voire fondue, pour procurer une excellente cohérence en surface du bloc allume-feu.

En surface du bloc allume-feu, la paraffine recouvre, enveloppe les copeaux ou particules de bois et est même en partie absorbée dans les copeaux ou particules de bois lorsque l'échauffement l'a liquéfiée, ce qui a pour effet de rendre sensiblement étanche en surface le bloc allume-feu du fait du caractère hydrophobe de la paraffine.

Il est important de veiller à ne pas choisir une poudre de paraffine de granulométrie trop élevée, le grain de paraffine ayant alors tendance à fondre sans s'enflammer en présence d'une flamme. La paraffine fondue aurait ainsi tendance à couler sans s'enflammer, risquerait d'éteindre la flamme qui a fondu le grain de paraffine et pourrait même brûler un utilisateur qui chercherait à allumer le bloc allume-feu en le tenant dans ses doigts. La granulométrie choisie facilite ainsi la combustion, diminue le risque de brûlure d'un utilisateur, améliore la cohérence et la qualité du bloc allume-feu.

De préférence, on peut prévoir que :
- le bloc allume-feu comporte une couche de surface cohérente en mélange de copeaux de bois ou de sciure de bois, et de paraffine, la cohérence de la couche de surface étant procurée par la paraffine qui adhère au moins partiellement aux copeaux de bois ou à la sciure de bois,
- à l'intérieur du bloc allume-feu, sous la couche de surface cohérente, le mélange compressé de copeaux de bois ou de sciure de bois avec la paraffine en poudre est plus friable que le mélange de la couche de surface.

La couche de surface cohérente confère une cohérence globale au bloc allume-feu pour éviter sa désagrégation. Cette couche de surface dure et cohérente limite en outre l'absorption d'humidité par les copeaux de bois ou la sciure de bois contenue dans le bloc, absorption d'humidité qui pourrait le faire éclater ou s'effriter du fait de la variation volumique des copeaux ou de la sciure se produisant lors de l'absorption.

Les faces de contact sont convexes selon toutes les directions transversales. Une telle forme est simple à réaliser et très efficace dans son fonctionnement pour faire reposer le bloc allume-feu sur un plan avec une partie de face de contact dirigée vers ledit plan et restant à l'écart dudit plan tout autour de la zone d'appui proéminente.

Le bloc allume-feu comporte deux faces de contact opposées convexes permettant chacune un appui stable sur un plan et se rejoignant selon un bord périphérique saillant. Un tel bloc allume-feu repose nécessairement sur l'une ou l'autre de ces deux faces de contact convexes. Il est ainsi inutile pour l'utilisateur de prêter attention au bloc allume-feu pour le poser d'une manière particulière sur un plan : le bloc allume-feu sera systématiquement placé posé dans une bonne position favorable à un allumage rapide et facile et permettant l'entretien et le maintien de la combustion.

De préférence, les copeaux de bois ou particules de sciure de bois peuvent avoir une taille telle qu'ils sont aptes à traverser un tamis dont la taille de maille est d'environ 4 mm, et présentent une dimension maximale inférieure à 10 mm environ, de préférence inférieure à 8 mm environ. On évite ainsi la présence de copeaux de trop grande taille qui pourraient induire un manque de cohérence du bloc allume-feu et pourraient provoquer une désagrégation prématurée du bloc allume-feu.

De préférence, le mélange peut comporter une teneur en paraffine comprise entre environ 20 % et environ 60 % en poids. Une telle teneur en paraffine procure un allumage rapide et facile en ne maintenant la flamme d'allumage de briquet ou d'allumette qu'un très faible temps. On limite ainsi les risques de brûlure pour l'utilisateur.

Avantageusement, on peut prévoir que le mélange comporte également un liant, de préférence du lignosulfite de calcium. Un tel liant améliore la résistance à l'humidité du bloc allume-feu, renforce sa cohérence en surface pour éviter toute désagrégation et procure une meilleure dureté et une meilleure densité qui viennent augmenter l'autonomie de combustion du bloc allume-feu de façon importante.

Il est également décrit un dispositif de fabrication de bloc allume-feu, comportant :
- un bol d'amenée de mélange, de préférence de forme conique et muni d'une vis sans fin conique d'amenée et de compression,
- une presse à agglomérer, comportant de préférence deux roues tangentes rotatives de compression,
- un bac de réception.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un mode de réalisation de bloc allume-feu qui ne fait pas partie de l'invention ;
- la figure 2 est une vue en coupe transversale du bloc allume-feu de la figure 1 ;
- la figure 3 est une vue en perspective d'un premier mode de réalisation de bloc allume-feu selon l'invention ;
- la figure 4 est une vue en coupe transversale du bloc allume-feu de la figure 3 ;
- la figure 5 est une vue en coupe transversale d'un second mode de réalisation de bloc allume-feu selon l'invention ; et
- la figure 6 est une vue schématique en coupe partielle d'un dispositif de fabrication de blocs allume-feu selon l'invention.

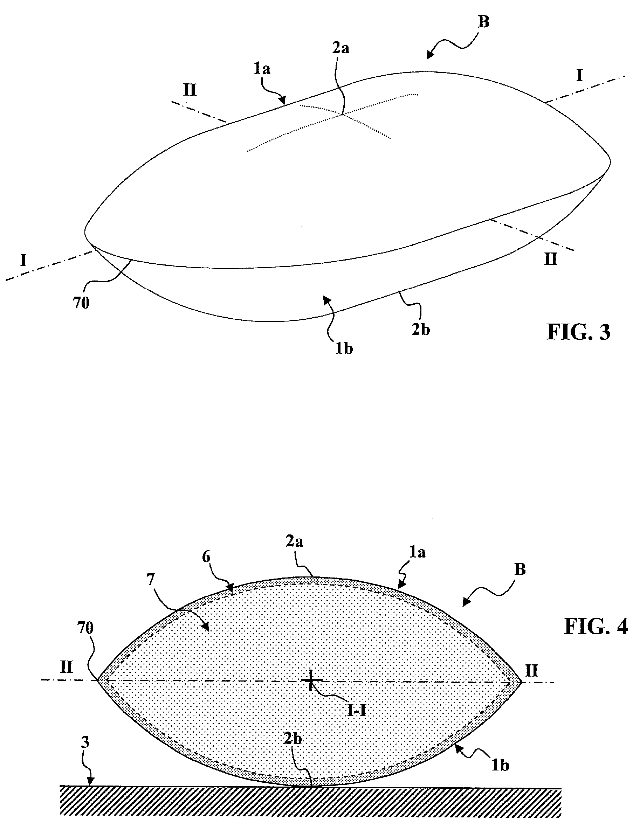

Les figures 3 à 5 illustrent deux modes de réalisation différents de blocs allume-feu selon l'invention.

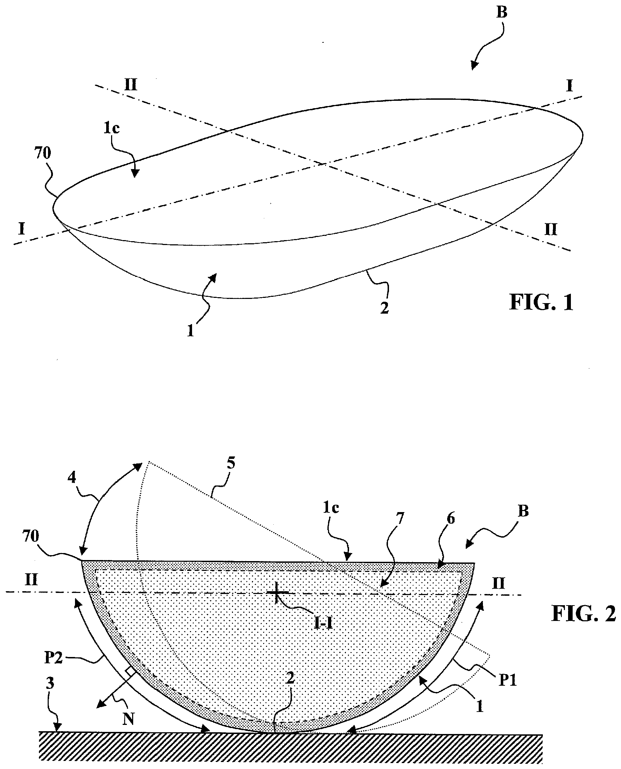

Un mode de réalisation pas couvert par les revendications est illustré sur les figures 1 et 2. Sur ces figures est représenté un bloc allume-feu B inflammable par un utilisateur pour initier la combustion de matériaux pour un feu à foyer ouvert ou fermé. Ce bloc allume-feu B comporte un mélange compressé de copeaux de bois, ou de sciure de bois, et de paraffine en poudre. Il comporte une face de contact 1 à zone d'appui 2 proéminente, et une face opposée 1c plane. La face de contact 1 et la face opposée 1c plane se rejoignent selon un bord périphérique 70 saillant et continu, contenu dans un plan qui, dans ce mode de réalisation, est le plan de la face opposée 1c. Le bloc allume-feu B est conformé de façon à reposer sur la zone d'appui 2 en équilibre stable sur un plan 3 avec des parties P1 et P2 de face de contact 1 dirigées vers le plan 3 et restant à l'écart dudit plan 3. Les parties P1 et P2 de face de contact 1 sont dirigées vers le plan 3 puisque, en chaque point des parties P1 et P2, la normale N à la face de contact 1 est dirigée vers le plan 3.

Sur la figure 2, le bloc allume-feu B est en équilibre stable sur le plan 3. En effet, après un écart par rapport à cette position, par exemple après un mouvement de basculement illustré par la double flèche 4 et l'enveloppe 5 en pointillés du bloc allume-feu B, le bloc allume-feu B a tendance à revenir dans sa position stable d'équilibre.

Pour embraser le bloc allume-feu B selon l'invention, l'utilisateur peut le poser dans la position illustrée sur la figure 2 et approcher une flamme d'allumage au contact des parties P1 et/ou P2 de face de contact 1. Les parties P1 et P2 de face de contact 1 étant dirigées vers le plan 3 et restant à l'écart du plan 3, l'utilisateur peut engager la flamme sous les parties P1 et P2 afin de les embraser facilement, sans avoir à tenir le bloc allume-feu B dans ses doigts.

Une fois embrasé au niveau des parties P1 et/ou P2, le bloc allume-feu B ne s'éteindra pas, les parties P1 et P2 restant en permanence à l'écart dudit plan 3. Et si par hasard le bloc allume-feu B venait à être pivoté à l'écart de sa position de posage, celui-ci reviendrait automatiquement dans sa position d'équilibre stable illustrée sur la figure 2, garantissant la présence d'oxygène au contact des parties P1 et P2 de face de contact 1 pour que perdure la combustion du bloc allume-feu B.

On voit plus particulièrement sur la figure 2 que le bloc allume-feu B comporte une couche de surface 6 cohérente en mélange de copeaux de bois ou de sciure de bois et de paraffine. La cohérence de la couche de surface 6 est procurée par les grains de paraffine qui adhèrent au moins partiellement aux copeaux de bois ou à la sciure de bois. Dans la zone intérieure 7 du bloc allume-feu B, sous la couche de surface 6 cohérente, le mélange de copeaux de bois ou de sciure de bois avec la paraffine en poudre est plus friable que le mélange de la couche de surface 6. La couche de surface 6 confère une bonne cohérence au bloc allume-feu B afin d'éviter sa désagrégation. En outre, la couche de surface 6 limite l'absorption d'humidité par les copeaux de bois ou la sciure de bois contenue dans le bloc allume-feu B.

À la différence du mode de réalisation représenté sur les figures 1 et 2, on réalise le premier mode de réalisation illustré sur les figures 3 et 4 dans lequel le bloc allume-feu B comporte deux faces de contact 1a et 1b convexes à zones d'appui respectives 2a et 2b proéminentes. Les faces de contact 1a et 1b opposées convexes permettent chacune un appui stable sur un plan et se rejoignent selon un bord périphérique 70 saillant et continu. La probabilité est alors élevée que, sans même que l'utilisateur n'ait à y prêter attention, le bloc allume-feu B se retrouve jeté en équilibre stable sur l'une des zones d'appui 2a ou 2b lorsque le bloc allume-feu B est jeté dans un foyer pour préparer un feu.

Le bloc allume-feu B de la figure 3 ne peut ainsi reposer que sur l'une de ses deux faces de contact 1a ou 1b convexes et est donc systématiquement posé dans une bonne position d'allumage, d'entretien et de maintien de combustion sans même que l'utilisateur n'ait à y prêter attention.

On voit plus particulièrement sur la figure 4 que le bloc allume-feu B présente une section sensiblement en forme de lentille biconvexe.

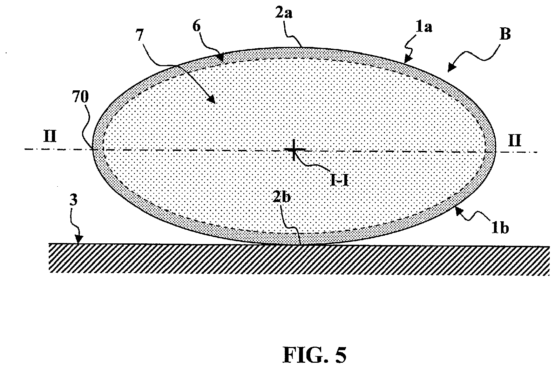

En alternative au mode de réalisation des figures 3 et 4, on pourra réaliser le bloc allume-feu B conformément à un second mode de réalisation de l'invention, représenté sur la figure 5, qui présente une section transversale sensiblement en forme d'ovale ou d'ellipse.

Dans les modes de réalisation des figures 1 à 5, les faces de contact 1, 1a et 1b sont convexes selon toutes les directions transversales telles que la direction axiale I-I et la direction transversale II-II. Les directions transversales telles que les directions I-I et II-II sont sensiblement parallèles au plan défini par le bord périphérique 70 saillant continu.

Dans le mode de réalisation illustré sur les figures 1 et 2, la face de contact 1 est entièrement convexe, selon toutes les directions transversales, telles que les directions I-I et II-II, ou directions dans le plan de la face plane 1c.

Cette convexité selon toutes les directions transversales telles que les directions I-I et II-II confère une forme particulière de face de contact 1, 1a et 1b aux blocs allume-feu B des figures 1 à 5, forme particulière qui permet à ceux-ci, en position d'équilibre stable sur un plan, de présenter une partie des faces de contact 1, 1a ou 1b dirigée vers ledit plan, restant à l'écart dudit plan et occupant toute la périphérie des zones d'appui 2, 2a et 2b proéminentes.

En l'espèce, cette convexité confère au bloc allume-feu B représenté sur la figure 3 une section sensiblement en forme de lentille biconvexe comme représenté sur la figure 4, et un bord 70 ovale ou elliptique.

Un utilisateur peut ainsi enflammer rapidement et facilement les blocs allume-feu B des figures 1 à 5 en présentant une flamme d'allumage selon n'importe quelle direction radiale contenue dans un plan parallèle à celui défini par le bord 70 saillant. Et la combustion se propage aisément entre blocs allume-feu adjacents par leurs bords 70 saillants.

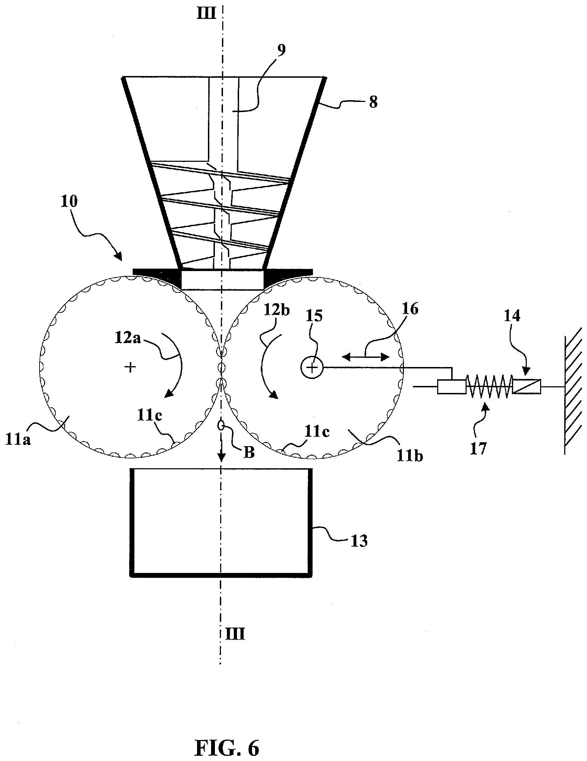

Un dispositif pour la fabrication des blocs allume-feu B tels qu'illustrés sur les figures 1 à 5 est représenté sur la figure 6. Ce dispositif comporte un bol d'amenée de mélange 8 conique. Le bol d'amenée de mélange 8 est muni d'une vis sans fin 9 conique d'amenée et de compression qui peut être mise en rotation selon la direction axiale III-III. Le dispositif comporte en outre une presse à agglomérer 10 rotative comportant deux roues tangentes rotatives de compression 11a et 11b. Les deux roues tangentes rotatives de compression 11a et 11b de la presse à agglomérer 10 sont des roues mouleuses comportant chacune des alvéoles de compression 11c radiales disposées sur la surface périphérique. Les alvéoles de compression 11c de la roue tangente rotative de compression 11 a viennent en correspondance chacune avec une alvéole de compression 11c de la roue tangente rotative de compression 11b lorsque les roues tangentes rotatives de compression 11a et 11b sont entraînées selon des mouvements synchronisés de rotations axiales de sens inverses indiqués par les flèches 12a et 12b. On obtient ainsi des blocs allume-feu B à deux faces de contact 1a et 1b opposées (figures 3 à 5).

En alternative au dispositif représenté sur la figure 6, on peut prévoir que l'une des roues tangentes rotatives de compression 11a ou 11b de la presse à agglomérer 10 est une roue pleine tandis que l'autre est une roue mouleuse munie d'alvéoles de compression 11c concaves. On obtient ainsi des blocs allume-feu à une face de contact 1 (figures 1 et 2). 2). Cette alternative ne fait pas partie de l'invention revendiquée.

Les alvéoles de compression 11c sont concaves selon toutes les directions transversales afin de procurer aux blocs allume-feu au moins une face de contact 1, 1a ou 1b convexe selon toutes directions.

On peut également chercher à réaliser les blocs allume-feu B selon l'invention par compression d'un mélange de copeaux de bois, ou de sciure de bois, et de paraffine en poudre entre une première et une seconde matrices déplaçables relativement l'une par rapport à l'autre par un mouvement de translation, mais le procédé est alors discontinu.

Le procédé de fabrication des blocs allume-feu B selon l'invention comporte les étapes suivantes :
a) fournir un mélange de copeaux de bois, ou de sciure de bois, et de paraffine en poudre,
b) introduire le mélange dans au moins une alvéole de compression 11c concave portée par une première matrice,
c) compresser le mélange dans l'alvéole de compression 11c au moyen d'une seconde matrice,
d) démouler la quantité de mélange contenue dans l'alvéole de compression 11c.

Dans le cas de l'utilisation d'un dispositif semblable à celui représenté sur la figure 6, le rôle des première et seconde matrices est assuré par les deux roues tangentes rotatives de compression 11a et 11b munies des alvéoles de compression 11c concaves. La compression est alors réalisée par la rotation des roues tangentes rotatives de compression 11a et 11b selon les mouvements illustrés par les flèches 12a et 12b.

En pratique, lors de l'utilisation du dispositif représenté sur la figure 6, on introduit un mélange de copeaux de bois, ou de sciure de bois, et de paraffine en poudre dans le bol d'amenée de mélange 8. La vis sans fin 9 conique amène et pré-compresse le mélange dans les alvéoles de compression 11c concaves afin de mieux remplir ces dernières. Simultanément, les roues tangentes rotatives de compression 11a et 11b sont entraînées en rotations de sens opposés et coopèrent pour enfermer et comprimer une quantité de mélange dans chacune de leurs alvéoles de compression 11c venant en correspondance lors de leur mouvement de rotation axiale. Lorsque les alvéoles de compression 11c sont venues en correspondance et s'écartent du fait du mouvement relatif des deux roues tangentes rotatives de compression 11a et 11b, le mélange compressé est démoulé et le bloc allume-feu B recueilli dans un bac de réception 13.

Au cours de la compression du mélange dans les alvéoles de compression 11c, le mélange, et plus particulièrement la partie de mélange au contact des alvéoles de compression 11c concaves, est légèrement échauffé. La paraffine alors présente dans cette zone a tendance à se ramollir, voire à fondre partiellement en adhérant de façon forte aux copeaux de bois ou à la sciure de bois environnante en les enveloppant sensiblement. On réalise ainsi la couche de surface 6 cohérente des blocs allume-feu B alors que le mélange compressé de copeaux de bois, ou de sciure de bois, et de paraffine en poudre à l'intérieur du bloc allume-feu B reste plus friable car pas ou peu affecté thermiquement au cours du procédé de fabrication.

Dans le dispositif illustré sur la figure 6, l'axe de rotation 15 de la roue tangente rotative de compression 11b est monté à coulissement pour autoriser des mouvements de translation bidirectionnelle illustrés par la double flèche 16. Ces mouvements de translation s'effectuent à l'encontre de la force de moyens élastiques de rappel 17 dont la force de rappel est ajustable par des moyens de réglage 14.

On peut ainsi régler de façon simple la force de compression appliquée au mélange enfermé dans les alvéoles de compression 11c, pour fabriquer des blocs allume-feu B plus ou moins denses et compacts. Et on évite également d'endommager le dispositif en cas de compression excessive du mélange. De façon générale, plus la force de compression est élevée plus l'autonomie de combustion du bloc allume-feu B sera grande.

Dans le mélange introduit dans le bol d'amenée de mélange 8, les copeaux de bois ou particules de sciure de bois sont un tamisat obtenu par un tamis dont la taille de maille est d'environ 4 mm, et présentent une dimension maximale inférieure à 10 mm de préférence inférieure à 8 mm. On évite ainsi que les copeaux de bois ou les particules de sciure de bois présentent une taille susceptible d'induire un manque de cohérence dans le bloc allume-feu B.

Afin de pouvoir compresser convenablement le mélange, il est avantageux d'utiliser des copeaux de bois ou de la sciure de bois présentant un taux d'humidité inférieur à environ 15 % en poids. Un taux d'humidité de 15 % en poids signifie que 100 g de copeaux de bois ou de sciure de bois contiennent 15 g d'eau libre.

De préférence, le taux d'humidité des copeaux de bois ou de la sciure de bois peut être compris entre environ 8 % et environ 12 % en poids. Un tel taux d'humidité est suffisamment faible pour qu'on puisse comprimer efficacement le mélange qui ne contient pas trop d'eau, et un tel taux est suffisamment voisin du taux d'humidité de l'air ambiant pour que le mélange après compression n'ait pas tendance à réabsorber de l'humidité contenue dans l'air ambiant en produisant l'éclatement ou la désagrégation du bloc allume-feu B.

On a obtenu de bons résultats en utilisant de la poudre de paraffine présentant une granulométrie comprise entre environ 600 µm et environ 2 mm, de préférence entre environ 600 µm et environ 800 µm. Une telle taille de grains de paraffine est suffisante pour agglomérer convenablement les copeaux de bois ou les particules de sciure de bois entre eux par simple compression sans nécessiter d'échauffement particulier. Et une telle taille est suffisamment faible pour qu'en surface du bloc allume-feu B, au contact des alvéoles de compression 11c où se produit un léger échauffement, les grains de paraffine soient suffisamment ramollis ou fondus pour réaliser la couche de surface 6 cohérente.

Après sa fabrication, le bloc allume-feu B fabriqué par le procédé selon l'invention présente une surface relativement brillante, lisse et dure, tandis que son intérieur est plus mat, plus granuleux et plus friable.

Dans le mélange introduit dans le bol d'amenée de mélange 8, on a obtenu de bons résultats en prévoyant une teneur en paraffine comprise entre environ 20 % et environ 60 % en poids du mélange.

On peut en outre introduire un liant dans le mélange, tel que du lignosulfite de calcium, pour améliorer la résistance à l'humidité du bloc allume-feu B, pour améliorer la cohérence du bloc allume-feu B, particulièrement dans la couche de surface 6, et pour améliorer la dureté et donc augmenter l'autonomie de combustion du bloc allume-feu B.

On comprendra que le dispositif selon l'invention est peu onéreux, peu encombrant, simple et sans danger à manipuler. Le procédé de fabrication selon l'invention permet de manipuler les quantités de matières premières de façon continue sans recourir à une fusion de la paraffine qui gaspillerait de l'énergie et augmenterait le danger du fait de la grande inflammabilité de la paraffine liquide à haute température.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'un bloc allume-feu (B), comportant les étapes suivantes :
a) fournir un mélange de copeaux de bois ou de sciure de bois et de paraffine en poudre,
b) introduire le mélange dans au moins une alvéole de compression (11c) concave portée par une première matrice,
c) compresser le mélange dans l'alvéole de compression (11c) au moyen d'une seconde matrice,
d) démouler la quantité de mélange contenue dans l'alvéole de compression (11c), dans lequel, lors des étapes b) et c), on introduit le mélange dans une presse à agglomérer (10) comportant deux roues tangentes rotatives de compression (11a, 11b) qui sont des roues mouleuses comportant chacune des alvéoles de compression (11c) concaves selon toutes les directions transversales (I-I, II-II) venant en correspondance lors de la rotation des roues tangentes rotatives de compression (11a, 11b) pour enfermer et compresser une quantité de mélange, **caractérisé en ce que** les alvéoles de compression (11c) sont conformées de telle sorte :
- qu'elles confèrent au bloc allume-feu (B) deux faces de contact (1a, 1b), convexes selon toutes les directions transversales (I-I, II-II), et à zone d'appui (2a, 2b) proéminente permettant au bloc allume-feu (B) de reposer sur la zone d'appui (2a, 2b) en équilibre stable sur un plan (3) avec une partie (P1, P2) de face de contact (1a, 1b) dirigée vers ledit plan (3), restant à l'écart dudit plan (3), et occupant toute la périphérie de la zone d'appui (2a, 2b) proéminente,
- qu'elles confèrent au bloc allume-feu (B), en coupe, une section sensiblement en forme de lentille biconvexe, en forme d'ovale ou en forme d'ellipse.

2. Procédé selon la revendication 1, **caractérisé en ce que** le mélange est introduit sous pression dans la presse à agglomérer (10), de préférence au moyen d'une vis sans fin (9) d'amenée et de compression.

3. Procédé selon l'une des revendications 1 ou 2, **caractérisé en ce que** les copeaux de bois ou la sciure de bois présentent avant compression un taux d'humidité inférieur à 15 % en poids, compris de préférence entre 8 % et 12 % en poids.

4. Procédé selon l'une quelconque des revendications 1 à 3, **caractérisé en ce que** les copeaux de bois ou la sciure de bois utilisés pour le mélange sont un tamisat obtenu par un tamis de taille de maille de 4 mm, et présentent une dimension maximale inférieure à 10 mm, de préférence inférieure à 8 mm.

5. Procédé selon l'une quelconque des revendications 1 à 4, **caractérisé en ce que** la poudre de paraffine présente une granulométrie comprise entre 600 µm et 2 mm, de préférence entre 600 µm et 800 µm.

6. Procédé selon l'une quelconque des revendications 1 à 5, **caractérisé en ce que** le mélange comporte une teneur en paraffine comprise entre 20 % et 60 % en poids.

7. Procédé selon l'une quelconque des revendications 1 à 6, **caractérisé en ce que** le mélange comporte également un liant, de préférence du lignosulfite de calcium.

## Patentansprüche

1. Verfahren zur Herstellung eines Feueranzünderblocks (B), umfassend die folgenden Schritte:
a) Bereitstellung einer Mischung aus Holzspänen oder Sägemehl und pulverisiertem Paraffin,
b) Einführen der Mischung in mindestens eine konkave Kompressionskammer (11c), die von einer ersten Matrix getragen wird,
c) Verdichten des Gemischs in der Kompressionskammer (11c) mittels einer zweiten Düse,
d) Entformen der in der Verdichtungskammer (11c) enthaltenen Mischungsmenge, wobei in den Schritten b) und c) die Mischung in eine Sinterpresse (10) mit zwei rotierenden tangentialen Verdichtungsrädern (11a, 11b) eingebracht wird, die Formräder mit jeweils in allen Querrichtungen (I-I, II-II) konkaven Verdichtungskammern (11c) sind, die während der Drehung der rotierenden Kompressionstangentenräder (11a, 11b) in Deckung kommen, um eine Gemischmenge einzuschließen und zu komprimieren, **dadurch gekennzeichnet, daß** die Kompressionszellen (11c) so geformt sind:
- dass sie dem Feueranzünderblock (B) zwei in allen Querrichtungen konvexe Kontaktflächen (1a, 1b) geben (I-I, II-II), und mit einer vorstehenden Stützzone (2a, 2b), die es dem Feueranzünderblock (B) erlaubt, auf der Stützzone (2a) aufzuliegen, 2b) in stabilem Gleichgewicht auf einer Ebene (3), wobei ein Teil (P1, P2) der Kontaktfläche (1a, 1b) auf die besagte Ebene (3) gerichtet ist, von der besagten Ebene (3) entfernt bleibt und den gesamten Umfang der vorstehenden Stützzone (2a, 2b) einnimmt,
- dass sie dem Feueranzünderblock (B) im Querschnitt einen Querschnitt im Wesentlichen in Form einer bikonvexen Linse, oval oder elliptisch, verleihen.

2. Verfahren nach Anspruch 1, **dadurch gekennzeichnet, dass** die Mischung unter Druck in die Sinterpresse (10), vorzugsweise mittels einer Förder- und Verdichtungsschnecke (9), eingebracht wird.

3. Verfahren nach einem der Ansprüche 1 oder 2, **dadurch gekennzeichnet, daß** die Holzspäne oder Sägespäne einen Feuchtigkeitsgehalt vor dem Verdichten von weniger als 15 Gew.-%, vorzugsweise zwischen 8 und 12 Gew.-%, aufweisen.

4. Verfahren nach einem der Ansprüche 1 bis 3, **dadurch gekennzeichnet, dass** für die Mischung Holzspäne oder Sägemehl verwendet werden, die durch ein Sieb mit einer Maschenweite von 4 mm gewonnen werden und eine maximale Abmessung von weniger als 10 mm, vorzugsweise weniger als 8 mm, aufweisen.

5. Verfahren nach einem der Ansprüche 1 bis 4, **dadurch gekennzeichnet, dass** das Paraffinpulver eine Teilchengröße zwischen 600 µm und 2 mm, vorzugsweise zwischen 600 µm und 800 µm, aufweist.

6. Verfahren nach einem der Ansprüche 1 bis 5, **dadurch gekennzeichnet, dass** die Mischung einen Paraffingehalt zwischen 20 und 60 Gew.-% aufweist.

7. Verfahren nach einem der Ansprüche 1 bis 6, **dadurch gekennzeichnet, dass** die Mischung auch ein Bindemittel, vorzugsweise Calciumlignosulfit, enthält.

## Claims

1. Method for manufacturing a firelighter block (B), comprising the following steps:
a) supplying a mixture of woodchips or sawdust and paraffin in powder form,
b) introducing the mixture into at least one concave compression cavity (11c) carried by a first die,
c) compressing the mixture in the compression cavity (11c) by means of a second die,
d) ejecting the quantity of mixture contained in the compression cavity (11c),
wherein, in the steps b) and c), the mixture is introduced into an agglomerating press (10) comprising two rotating tangential compression wheels (11a, 11b) which are moulding wheels each comprising concave compression cavities (11c) in all the transverse directions (I-I, II-II) that come together corresponding to one another during rotation of the rotating tangential compression wheels (11a, 11b) to enclose and compress a quantity of mixture,
**characterized in that** the compression cavities (11c) are configured in such a way:
- that they provide the firelighter block (B) with two convex contact faces (1a, 1b) in all the transverse directions (I-I, II-II), and with a prominent supporting zone (2a, 2b) allowing the firelighter block (B) to rest on the supporting zone (2a, 2b) in stable equilibrium on a plane (3) with a part (P1, P2) of contact face (1a, 1b) directed towards said plane (3), remaining at a distance from said plane (3), and occupying all the periphery of the prominent supporting zone (2a, 2b),
- that they provide the firelighter block (B), in cross section, with a section substantially in the form of a biconvex lens, in the form of an oval or in the form of an ellipse.

2. Method according to Claim 1, **characterized in that** the mixture is introduced under pressure into the agglomerating press (10), preferably by means of a feeding and compression worm screw (9).

3. Method according to one of Claims 1 and 2, **characterized in that** the woodchips or sawdust have, before compression, a moisture content below 15% by weight, preferably between 8% and 12% by weight.

4. Method according to any one of Claims 1 to 3, **characterized in that** the woodchips or sawdust used for the mixture are a sieved material obtained using a sieve with a mesh size of 4 mm, and have a maximum size less than 10 mm, preferably less than 8 mm.

5. Method according to any one of Claims 1 to 4, **characterized in that** the paraffin powder has a particle size of between 600 µm and 2 mm, preferably between 600 µm and 800 µm.

6. Method according to any one of Claims 1 to 5, **characterized in that** the mixture comprises a paraffin content of between 20% and 60% by weight.

7. Method according to any one of Claims 1 to 6, **characterized in that** the mixture also comprises a binder, preferably calcium lignosulphite.
